# FASCICULE DE BREVET EUROPEEN

(11) **EP 2 793 070 B1**
(45) Date de publication et mention de la délivrance du brevet: **06.07.2016**
(21) Numéro de dépôt: 14163145.7
(22) Date de dépôt: 02.04.2014
(51) Int. Cl.: G02B 27/01, G09G 5/02, G06T 19/00

(54) **Systeme de visualisation hybride affichant des informations en superposition sur l'exterieur**
Hybridanzeigesystem, bei dem Informationen mit Bildüberlagerung nach außen angezeigt werden
Hybrid viewing system for displaying information superimposed on the outside

(30) Priorité: 19.04.2013 FR 1300928
(43) Date de publication de la demande: 22.10.2014
(73) Titulaire: THALES, 92400 Courbevoie (FR)
(72) Inventeur: Lux, Johanna, 33187 LE HAILLAN Cedex (FR); Ellero, Sébastien, 47600 FRANCESCAS (FR); Coupeaud, Christophe, 33187 LE HAILLAN Cedex (FR)
(74) Mandataire: Bréda, Jean-Marc

(56) Documents cités:
- WO-A1-2007/106092
- WO-A1-2010/103955
- US-A- 4 028 725
- US-A1- 2012 127 284

## Description

Le domaine de l'invention est celui des systèmes de visualisation de planches de bord ou de cockpits de véhicules. L'invention s'applique tout particulièrement au domaine des aéronefs civils ou militaires. Elle peut s'appliquer également aux moyens de transport routiers, maritimes ou ferroviaires.

Actuellement, les planches de bord des cockpits d'aéronefs modernes comportent sur la majeure partie de leur surface des écrans de visualisation et des instruments, diminuant ainsi la vision directe du paysage extérieur dans la zone basse du cockpit. Dans un certain nombre d'applications, dont le vol à vue à basse altitude, cette absence de vision directe peut être gênante.

Une première solution simple consiste pour le pilote à se contorsionner pour voir au-dessus des écrans de visualisation, quand cela est possible.

Une seconde solution consiste à utiliser des systèmes de visualisation collimatés encore appelés en terminologie anglaise « See through ». Ils comportent essentiellement deux grandes familles qui sont les viseurs de casque portés par la tête du pilote et les dispositifs d'affichage dits « Tête Haute » ou « Head-Up Displays » montés à demeure dans le cockpit. Ces dispositifs superposent des informations sous forme d'imagerie ou de symbologie sur le paysage extérieur.

Ces derniers équipements ont la particularité d'être collimatés, c'est-à-dire que les informations issues d'un afficheur sont projetées à l' « infini » au moyen d'une optique adaptée. Le pilote n'a donc pas besoin d'accommoder sur les informations ou sur le paysage, les deux étant vus nets simultanément. Ces équipements présentent une certaine complexité technique et ont donc un coût important. De plus, les informations sont présentées de manière spécifique pour ne pas masquer le paysage en arrière plan, ce qui implique une représentation différente de celle des écrans dits « tête-basse ». Le pilote doit alors fournir un certain effort dans ses allers-retours entre les écrans « tête-haute » et « tête-basse » pour retrouver ses repères.

Une troisième solution consiste à utiliser des écrans de visualisation semi-transparents placés dans le champ de vision de l'utilisateur et qui permettent de projeter une image en superposition sur le paysage extérieur. L'avantage de ces écrans est qu'il est possible d'obtenir de grandes surfaces d'affichage visibles dans un grand champ de vision à des coûts inférieurs aux systèmes collimatés. L'inconvénient principal de ces écrans est que l'image n'est pas collimatée, ce qui peut poser des problèmes de parallaxe et d'accommodation.

Le document US 2012/0127284 A1 divulgue un système comprenant à la fois un dispositif d'affichage porté par la tête et un dispositif d'affichage sur un moniteur. Le document US 4028725 décrit un dispositif porté par un pilote, dont l'affichage est contrôlé de manière à ne pas se superposer à l'affichage du tableau de bord.

Le système selon l'invention consiste à coupler un dispositif d'affichage collimaté monté sur la tête du pilote, ayant un champ de vue réduit, à un dispositif d'affichage transparent non-collimaté, ayant un grand champ de vue. L'ensemble est associé à un système de Détection De Position ou DDP de la tête et/ou du regard du pilote pour pouvoir corréler l'affichage des deux systèmes en fonction de la position de la tête et/ou du regard du pilote.

Cet ensemble permet au pilote d'avoir, dans son champ de vue primaire, des informations de pilotage et de navigation superposées au paysage, grâce à un dispositif peu encombrant et peu coûteux, tout en ayant d'autres informations affichées dans un grand champ et une grande boîte à oeil et en gardant une bonne visibilité du paysage extérieur.

Plus précisément, l'invention a pour objet un système de visualisation de planche de bord ou de cockpit tel que décrit dans la revendication 1.

Avantageusement, le premier dispositif de visualisation affiche une image stéréoscopique sur l'écran semi-transparent et le second dispositif de visualisation est binoculaire et comporte des moyens de sélection des images stéréoscopiques émises par le premier dispositif de visualisation.

Avantageusement, le second dispositif de visualisation est un visuel de casque ou des lunettes de réalité augmentée.

Avantageusement, l'écran de visualisation semi-transparent comporte au moins un capteur photosensible mesurant les caractéristiques photométriques et/ou colorimétriques de l'environnement extérieur et des moyens liés audit capteur permettant d'asservir la luminance et/ou la colorimétrie de la première image en fonction desdites caractéristiques photométriques et/ou colorimétriques.

Avantageusement, le second dispositif de visualisation comporte au moins un second capteur photosensible destiné à mesurer les caractéristiques photométriques et/ou colorimétriques de l'environnement extérieur vu par les yeux de l'utilisateur et des moyens liés audit second capteur photosensible permettant d'asservir la luminance et/ou la colorimétrie de la seconde image en fonction desdites caractéristiques photométriques et/ou colorimétriques.

Avantageusement, le système de visualisation est un système de planche de bord ou de cockpit d'aéronef.

L'invention sera mieux comprise et d'autres avantages apparaîtront à la lecture de la description qui va suivre donnée à titre non limitatif et grâce aux figures annexées parmi lesquelles :
La figure 1 représente un synoptique général d'un système de visualisation selon l'invention ;
Les figures 2 à 6 représentent différents modes de présentation possible des images dans un système de visualisation . Les figures 3 à 5 correspondent à des systèmes selon l'invention.

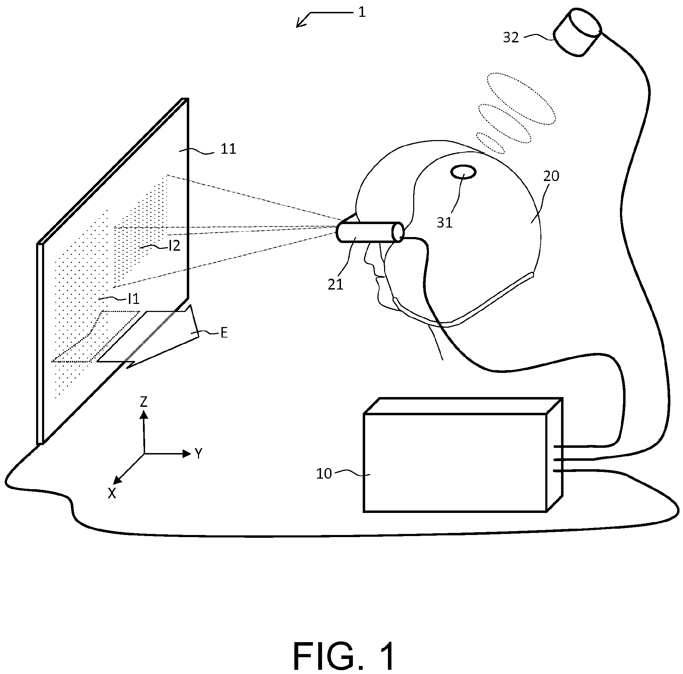

A titre d'exemple non limitatif, la figure 1 représente un synoptique général d'un système de visualisation 1 selon l'invention dans le cadre d'une application aéronautique. Le système est intégré à un cockpit d'aéronef. Il comprend essentiellement :
- un premier dispositif de visualisation fixe dans un repère prédéterminé (X, Y, Z), ledit premier dispositif de visualisation comprenant un écran semi-transparent 11 sur lequel est affichée une première image I1 symbolisée par des pointillés sur la figure 1. Ce premier dispositif est vu d'un utilisateur sous un angle de vue important de l'ordre de plusieurs dizaines de degrés. Le système peut comprendre plusieurs dispositifs de visualisation disposés en ligne pour former la planche de bord de l'aéronef ;
- un second dispositif de visualisation 21 monté sur un casque 20 et porté par la tête de l'utilisateur. Ce second dispositif comporte des moyens d'afficher dans le champ de vision dudit utilisateur une seconde image collimatée dans un champ visuel prédéterminé. Ce champ est de plus petites dimensions que le précédent. Ces dimensions angulaires sont comprises entre quelques degrés et cinquante degrés. Pour des applications ne nécessitant pas de casque, le second dispositif de visualisation peut également être une paire de lunettes de réalité augmentée, c'est-à-dire des lunettes comportant des moyens de visualisation intégrés permettant de présenter une image collimatée dans le champ de vision du porteur desdites lunettes;
- une détection de l'orientation et de la position du casque dans le repère prédéterminé. Classiquement, une détection de casque comporte un premier sous-ensemble 31 lié au casque et un second sous-ensemble 32 lié au repère (X, Y, Z) ;
- un ensemble de moyens électroniques représentés par le calculateur 10. Cet ensemble de moyens n'est pas nécessairement centralisé dans un calculateur unique. Cet ensemble regroupe les moyens suivants :
   - Génération des images pour le premier dispositif de visualisation et le second dispositif de visualisation ;
   - Commande de la détection de position de casque et calcul de la position et de l'orientation du casque dans l'espace ;
   - Détermination de la zone d'intersection du champ visuel prédéterminé avec l'écran semi-transparent ;
   - Génération dans la zone d'intersection de l'écran semi-transparent d'une première image spécifique, fonction de la première image et de la seconde image et/ou génération dans le second dispositif de visualisation d'une seconde image spécifique, également fonction de la première image et de la seconde image.

Sur cette figure 1, on a également représenté la transmission du paysage extérieur E par l'écran semi-transparent 11 par une flèche large. On a également représenté l'image projetée I1 sur cet écran 11 par un premier losange en pointillés et la projection virtuelle de l'image collimatée I2 par le second dispositif de visualisation 21 par un second losange en pointillés.

Les technologies utilisées pour réaliser une image sur un écran semi-transparent 11 à grand champ et grande boîte-à-oeil sont multiples. On peut, par exemple, projeter l'image sur un film « PDLC », acronyme signifiant « Polymer Dispersed Liquid Crystal » ou sur un écran passif comportant des motifs gravés dispersants dont la répartition est fonction de la transparence souhaitée. On peut aussi utiliser un écran transparent matriciel actif de type « LCD », acronyme signifiant « Liquid Crystal Display » ou « OLED », acronyme signifiant « Organic Light Electroluminescent Diode ».

Dans une variante de configuration, cet écran semi-transparent 11 peut être à affichage « 3D » ou stéréoscopique. On sait que cette technologie consiste à envoyer des images dédiées à l'oeil droit de l'utilisateur et des images dédiées à son oeil gauche. La discrimination des images peut être réalisée séquentiellement dans le temps ou par des moyens de séparation spatiale, tels que la polarisation. Dans ce cas, les polariseurs ou les obturateurs ou « shutters » électroniques synchronisés avec les images projetées peuvent être intégrés dans le dispositif d'affichage collimaté déjà monté sur la tête du pilote.

Les technologies pour réaliser le second dispositif d'affichage collimaté 21 à petit champ porté par le casque sont diverses. On peut, à titre d'exemples non limitatifs, mettre en oeuvre :
un dispositif de projection d'images sur une visière standard, ou ;
un ensemble optique comprenant un mélangeur optique dit à expansion de pupille constitué d'un guide de lumière comprenant des lames semi-réfléchissantes intégrées, ou encore ;
des hologrammes ou des réseaux de diffraction.

On peut également utiliser des lunettes de réalité augmentée.

Le dispositif de visualisation peut être monoculaire, bi-oculaire ou binoculaire. Dans ce dernier cas, chaque oeil voit un champ visuel différent avec une partie centrale commune.

Si l'écran transparent est passif et comporte un projecteur d'images, le système de projection et l'écran sont couplés afin de limiter les vibrations qui peuvent être importantes en environnement aéronautique. Soit les deux sous-ensembles sont liés physiquement, soit un accéléromètre positionné sur chaque sous-ensemble permet d'asservir la position de l'écran et l'image projetée, soit le projecteur envoie une mire sur le système de maintien de l'écran qui comporte un couple de capteurs photosensibles. On trouvera plus d'informations sur cette dernière technique d'asservissement dans le brevet FR 2 959 023 intitulé « Système de visualisation multi-projecteurs asservi ». Ces capteurs peuvent de plus servir à l'asservissement de la luminosité du projecteur en fonction de la luminosité ambiante et/ou extérieure et peuvent aussi contrôler d'autres caractéristiques des projecteurs telles que la colorimétrie ou les images figées.

Ce type de capteur photosensible peut également être monté sur ou au voisinage du second dispositif de visualisation de façon à mesurer les caractéristiques photométriques et/ou colorimétriques de l'environnement extérieur vu par les yeux de l'utilisateur. Des moyens liés audit second capteur photosensible permettent d'asservir la luminance et/ou la colorimétrie de la seconde image en fonction desdites caractéristiques photométriques et/ou colorimétriques.

Optionnellement, l'écran peut devenir interactif tout en gardant sa transparence grâce, par exemple, à une technologie tactile optique, résistive et/ou capacitive.

Il existe différentes techniques permettant de repérer un objet dans l'espace. On peut, par exemple, utiliser la détection électromagnétique. Un émetteur est disposé dans le repère fixe et un récepteur dans le repère mobile. On peut également utiliser la détection optique, qui peut être passive ou active. Dans ce dernier cas, le casque porte des diodes électroluminescentes dont la position de l'émission est repérée par des caméras. Avantageusement, le système peut utiliser un système de détection de position hybride combinant plusieurs procédés et/ou utilisant des capteurs inertiels à « MEMS » couplés à une centrale inertielle, MEMS étant l'acronyme anglais de « Micro-Electro-Mechanical-System ». Toutes ces techniques sont connues de l'homme du métier. Elles sont compatibles d'un fonctionnement en temps réel et s'adaptent facilement au système de visualisation selon l'invention.

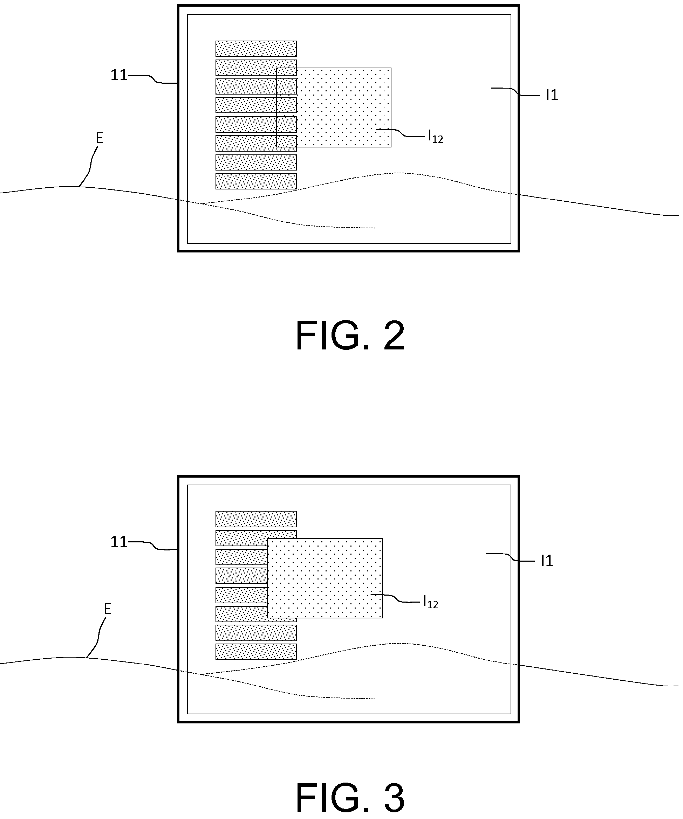

Les figures 2 à 6 représentent l'écran semi-transparent 11 précédent. Sur cet écran est affichée une image I1 représentée symboliquement par une série de rectangles sur les figures 2 à 6. Cette image peut comporter des symboles et/ou une image vidéo. Cet écran semi-transparent laisse passer le paysage extérieur E que l'on distingue en semi-transparence.

On a ajouté sur ces différentes figures la zone d'intersection de l'image collimatée I2 donnée par le second système de visualisation avec l'écran semi-transparent. On a noté cette zone I₁₂.

Cette zone peut, bien entendu, comporter l'image I1 et l'image I2 donnée par le dispositif de visualisation collimatée sans qu'il y ait d'interactions entre les deux dispositifs de visualisation. Il y a alors simple superposition des deux images dans le champ visuel de l'utilisateur. C'est ce qui est illustré sur la figure 2.

Dans un second mode de fonctionnement, correspondant à l'invention, on privilégie l'image donnée par le second dispositif de visualisation. Dans ce cas, les moyens de commande électroniques suppriment le contenu de la partie de l'image I1 contenue dans la zone d'intersection. C'est ce qui est illustré sur la figure 3. La partie des rectangles de la figure 2 appartenant à la zone I₁₂ n'est plus affichée.

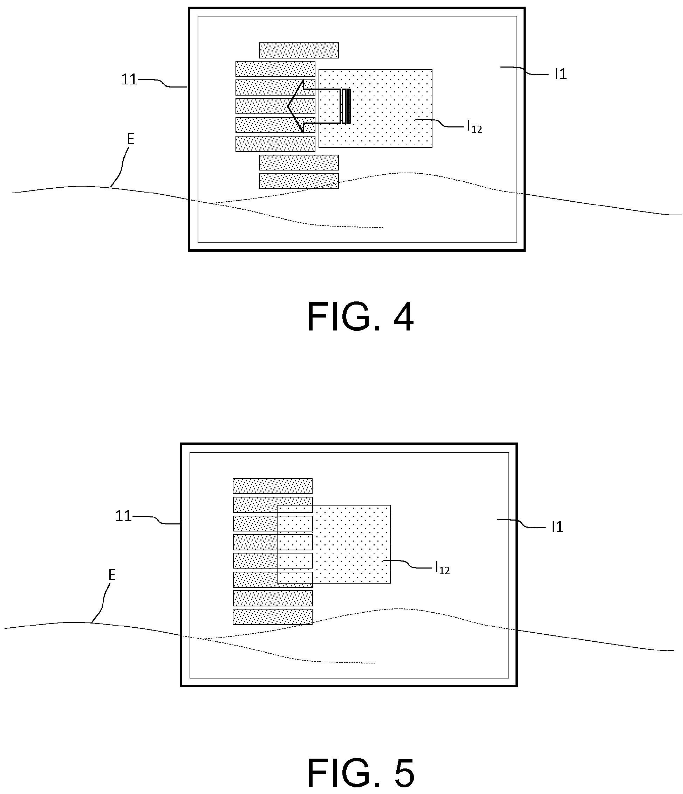

Dans un troisième mode de fonctionnement , correspondant à l'invention, qui est une variante du précédent mode, les informations contenues dans la zone d'intersection sont simplement déplacées sur l'écran semi-transparent. C'est ce qui est illustré sur la figure 4. Les rectangles de la figure 2 appartenant à la zone I₁₂ sont décalés.

Dans un quatrième mode de fonctionnement, correspondant également à l'invention, les informations contenues dans la zone d'intersection et appartenant à l'image I1 sont transférées dans le second système de visualisation et affichées dans l'image I2. Ainsi, au lieu d'être vues à distance finie dans le plan de l'écran semi-transparent, elles sont perçues à l'infini. C'est ce qui est illustré sur la figure 5. On peut également faire l'inverse. C'est-à-dire afficher sur l'écran semi-transparent une image I1 qui comporte dans la zone I₁₂ l'image I2 du second dispositif de visualisation. Dans ce cas, la totalité de l'image est à distance finie.

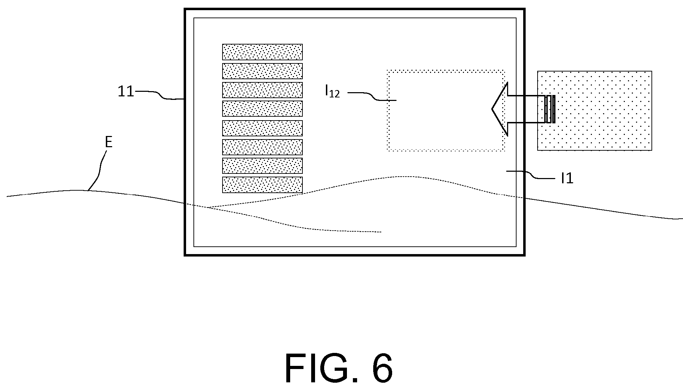

Enfin, dans un cinquième mode de réalisation, on peut simplement éteindre l'image I2 du second dispositif de visualisation lorsqu'elle pénètre dans le champ de l'écran semi-transparent. C'est ce qui est illustré sur la figure 6.

## Revendications

1. Système de visualisation (1) de planche de bord ou de cockpit comportant :
un premier dispositif de visualisation fixe dans un repère prédéterminé (X, Y, Z), ledit premier dispositif de visualisation comprenant un écran semi-transparent (11) sur lequel est affichée une première image (I1) ;
un second dispositif de visualisation (21) destiné à être porté par la tête d'un utilisateur, ledit second dispositif comportant des moyens d'afficher dans le champ de vision dudit utilisateur une seconde image collimatée (I2) dans un champ visuel prédéterminé ;
une détection (31, 32) de l'orientation et de la position dudit second dispositif de visualisation dans ledit repère prédéterminé ;
**caractérisé en ce que** le système comporte des premiers moyens permettant de déterminer la zone d'intersection du champ visuel prédéterminé avec l'écran semi-transparent et des seconds moyens permettant d'adapter le contenu des informations de la première image présent dans la zone d'intersection, l'adaptation dudit contenu consistant en sa suppression dans la zone d'intersection, en son déplacement hors de la zone d'intersection ou en son transfert dans le second dispositif de visualisation.

2. Système de visualisation la revendication 1, **caractérisé en ce que** le premier dispositif de visualisation affiche une image stéréoscopique sur l'écran semi-transparent.

3. Système de visualisation selon la revendication 2, **caractérisé en ce que** le second dispositif de visualisation est binoculaire et comporte des moyens de sélection des images stéréoscopiques émises par le premier dispositif de visualisation.

4. Système de visualisation selon l'une des revendications précédentes, **caractérisé en ce que** le second dispositif de visualisation est un visuel de casque ou des lunettes de réalité augmentée.

5. Système de visualisation selon l'une des revendications précédentes, **caractérisé en ce que** l'écran de visualisation semi-transparent comporte au moins un premier capteur photosensible mesurant les caractéristiques photométriques et/ou colorimétriques de l'environnement extérieur et des moyens liés audit premier capteur permettant d'asservir la luminance et/ou la colorimétrie de la première image en fonction desdites caractéristiques photométriques et/ou colorimétriques.

6. Système de visualisation selon l'une des revendications précédentes, **caractérisé en ce que** le second dispositif de visualisation comporte au moins un second capteur photosensible destiné à mesurer les caractéristiques photométriques et/ou colorimétriques de l'environnement extérieur vu par les yeux de l'utilisateur et des moyens liés audit second capteur photosensible permettant d'asservir la luminance et/ou la colorimétrie de la seconde image en fonction desdites caractéristiques photométriques et/ou colorimétriques.

7. Système de visualisation selon l'une des revendications précédentes, **caractérisé en ce que** le système de visualisation est un système de planche de bord ou de cockpit d'aéronef.

## Patentansprüche

1. Instrumententafel- oder Cockpit-Anzeigesystem (1), das Folgendes umfasst:
ein erstes festes Anzeigegerät in einem vorbestimmten Bezugssystem (X, Y, Z), wobei das erste Anzeigegerät einen teiltransparenten Bildschirm (11) umfasst, auf dem ein erstes Bild angezeigt wird (I1);
ein zweites Anzeigegerät (21) zum Tragen am Kopf eines Benutzers, wobei das zweite Gerät Mittel zum Anzeigen eines zweiten kollimierten Bildes (12) in einem vorbestimmten Sichtfeld im Blickfeld des Benutzers umfasst;
einen Detektor (31, 32) zum Detektieren der Orientierung und der Position des zweiten Anzeigegeräts in dem vorbestimmten Bezugssystem,
**dadurch gekennzeichnet, dass** das System erste Mittel zum Ermitteln der Schnittzone des vorbestimmten Sichtfeldes mit dem teiltransparenten Bildschirm und zweite Mittel zum Anpassen des Inhalts der Informationen von dem ersten in der Schnittzone vorhandenen Bild umfasst, wobei die Adaption des Inhalts in dessen Unterdrückung in der Schnittzone, in dessen Verdrängung aus der Schnittzone oder in dessen Übertragung auf das zweite Anzeigegerät besteht.

2. Anzeigesystem nach Anspruch 1, **dadurch gekennzeichnet, dass** das erste Anzeigegerät ein stereoskopisches Bild auf dem teiltransparenten Bildschirm anzeigt.

3. Anzeigesystem nach Anspruch 2, **dadurch gekennzeichnet, dass** das zweite Anzeigegerät binokular ist und Mittel zum Auswählen von vom ersten Anzeigegerät übertragenen stereoskopischen Bildern umfasst.

4. Anzeigesystem nach einem der vorherigen Ansprüche, **dadurch gekennzeichnet, dass** das zweite Anzeigesystem ein helmmontiertes Display or eine Erweiterte-Realität-Brille ist.

5. Anzeigesystem nach einem der vorherigen Ansprüche, **dadurch gekennzeichnet, dass** der teiltransparente Anzeigeschirm wenigstens einen ersten fotoempfindlichen Sensor zum Messen der fotometrischen und/oder kolorimetrischen Charakteristiken der Außenumgebung und mit dem ersten Sensor verbundene Mittel zum Steuern der Luminanz und/oder Kolorimetrie des ersten Bildes in Abhängigkeit von den fotometrischen und/oder kolorimetrischen Charakteristiken umfasst.

6. Anzeigesystem nach einem der vorherigen Ansprüche, **dadurch gekennzeichnet, dass** das zweite Anzeigegerät wenigstens einen zweiten fotosensitiven Sensor zum Messen der fotometrischen und/oder kolorimetrischen Charakteristiken der durch die Augen des Benutzers gesehenen Außenumgebung und mit dem zweiten Sensor verbundene Mittel zum Steuern der Luminanz und/oder der Kolorimetrie des zweiten Bilds in Abhängigkeit von den fotometrischen und/oder kolorimetrischen Charakteristiken umfasst.

7. Anzeigesystem nach einem der vorherigen Ansprüche, **dadurch gekennzeichnet, dass** das Anzeigesystem eine Instrumententafel oder ein Luftfahrzeug-Cockpit-System ist.

## Claims

1. An instrument panel or cockpit display system (1) comprising:
a first display device fixed in a predetermined coordinate system (X, Y, Z), said first display device comprising a semi-transparent screen (11), on which a first image is displayed (I1);
a second display device (21) intended to be worn on the head of a user, said second device comprising means for displaying a second collimated image (I2) in a predetermined visual field in the field of view of said user;
a detection (31, 32) of the orientation and the position of said second display device in said predetermined coordinate system,
**characterised in that** said system comprises first means for determining the intersection zone of said predetermined visual field with the semi-transparent screen and second means for adapting the content of the information from said first image present in the intersection zone, said adaptation of said content involving its suppression in the intersection zone, its displacement outside of the intersection zone or its transfer to said second display device.

2. The display system according to claim 1, **characterised in that** said first display device displays a stereoscopic image on said semi-transparent screen.

3. The display system according to claim 2, **characterised in that** said second display device is binocular and comprises means for selecting stereoscopic images transmitted by said first display device.

4. The display system according to any one of the preceding claims, **characterised in that** said second display device is a helmet-mounted display or augmented reality glasses.

5. The display system according to any one of the preceding claims, **characterised in that** said semi-transparent display screen comprises at least one first photosensitive sensor measuring the photometric and/or colorimetric characteristics of the external environment and means connected to said first sensor for controlling the luminance and/or the colorimetry of said first image as a function of said photometric and/or colorimetric characteristics.

6. The display system according to any one of the preceding claims, **characterised in that** said second display device comprises at least one second photosensitive sensor intended to measure the photometric and/or colorimetric characteristics of the external environment seen through the eyes of the user and means connected to said second sensor for controlling the luminance and/or the colorimetry of said second image as a function of said photometric and/or colorimetric characteristics.

7. The display system according to any one of the preceding claims, **characterised in that** said display system is an aircraft instrument panel or cockpit system.
